# EUROPEAN PATENT APPLICATION

(11) **EP 4 637 189 A1**
(43) Date of publication of application: **22.10.2025**
(21) Application number: 23937112.3
(22) Date of filing: 15.06.2023
(51) Int. Cl.: H04W 4/06

(54) **MICROINVERTER BLUETOOTH LOCKING METHOD AND DEVICE, AND MEDIUM THEREFOR**

(30) Priority: 15.05.2023 CN 202310549578
(71) Applicant: Altenergy Power System Inc., Jiaxing, Zhejiang 314050 (CN)
(72) Inventor: HE, Yunyi, Jiaxing, Zhejiang 314050 (CN); MENG, Chen, Jiaxing, Zhejiang 314050 (CN); SHEN, Qin, Jiaxing, Zhejiang 314050 (CN)
(74) Representative: Müller Schupfner & Partner Patent- und Rechtsanwaltspartnerschaft mbB (Muc)
(86) International application number: PCT/CN2023/100367
(87) International publication number: WO 2024/234435

(57) **Abstract**

A microinverter Bluetooth locking method and device, and a medium therefor, relating to the technical field of distributed power generation systems, for use in achieving the locking control of a Bluetooth signal from a microinverter. Regarding the existing problem that flexible turning-on/turning-off of Bluetooth is not supported, the microinverter Bluetooth locking method is provided. Firstly, networking information uploaded by a user is received by means of a Bluetooth signal, such that a microinverter is connected to a local area network, then connected to the Internet by means of a router, and thus connected to a remote server, to achieve remote network control of the microinverter. Subsequently, the user can control the locking of the Bluetooth signal from the microinverter without using an external switch, thereby effectively solving the problem that an external switch is not suitable for being provided due to a special application environment of a microinverter. Additionally, a Bluetooth signal can be activated in a locked state by disconnecting the microinverter from the network, thereby achieving more flexible use and maintenance of the microinverter.

## Description

This application claims the priority to Chinese Patent Application No.202310549578.1, titled "MICROINVERTER BLUETOOTH LOCKING METHOD AND DEVICE, AND MEDIUM THEREFOR", filed on May 15, 2023 with the China National Intellectual Property Administration, which is incorporated herein by reference in its entirety.

### FIELD

The present disclosure relates to the technical field of distributed power generation systems, and in particular to a method and an apparatus for controlling Bluetooth locking of a microinverter, and a medium therefor.

### BACKGROUND

Currently, in order to improve user experience, some current Internet of Things devices are designed to support both local control and remote control. Combined application of Bluetooth and Wi-Fi (wireless network communication technology) is a common implementation: the Internet of Things device is locally connected to a user's mobile device (for example a mobile phone with Bluetooth function) through Bluetooth, such that the user can control the Internet of Things device based on software; the Internet of Things device establishes a network connection with a remote server via Wi-Fi, thereby other remote users remotely controls the Internet of Things device by means of the server and the network.

In some specific application scenarios, users require to freely control the turning on and off of the Bluetooth signal of a device (especially when the device does not support identity authentication in a Bluetooth access scenario), in other words, turn on the Bluetooth signal of the device when needed and turn off the Bluetooth signal when not needed, to prevent other users from accessing and controlling the device. Currently, most Internet of Things devices are provided with corresponding hardware switches on its housing, and the user freely controls the turning on and off of the Bluetooth signal by performing specific operations on the hardware switches.

However, for a microinverter, the microinverter is generally arranged outdoors due to its application scenario (usually applied in photovoltaic power generation). In view of waterproofing of the microinverter in outdoor environment, the housing of the microinverter is generally not provided with external switches, causing that the user fails to control the on and off of the Bluetooth signal of the microinverter through external switches, and resulting in poor user experience and low control security.

Therefore, it is required to develop a method for controlling Bluetooth locking of a microinverter by those skilled in the art, to address a problem that microinverters do not support flexible control of on and off of the Bluetooth signal.

### SUMMARY

The purposes of the present disclosure are to provide a method and an apparatus for controlling Bluetooth locking of a microinverter, and a medium therefor to address the issue that microinverters do not support flexible control of on and off of the Bluetooth signal.

In order to address the technical problem, a method for controlling Bluetooth locking of a microinverter is provided according to the present disclosure. The method includes:
turning on a Bluetooth signal by default during an initialization phase to establish Bluetooth communication with a user terminal;
receiving, through the Bluetooth communication, networking information sent by the user terminal, connecting to a router according to the networking information, and setting a first flag to a success state in response to networking being successful;
establishing, via the router, a network connection with a server, and setting a second flag to a success state when the network connection with the server is established successfully; and
enabling, only in response to both the first flag and the second flag being the success state, switching of Bluetooth between a locked state and an unlocked state according to a control instruction sent by the user terminal or the server, where the control instruction is configured to turn on and turn off the Bluetooth signal.

In an embodiment, when the Bluetooth is in the locked state, the method further includes:
determining whether both the first flag and the second flag are the success state, and turning on the Bluetooth signal on determining that the first flag or the second flag is not the success state.

In an embodiment, when the Bluetooth is in the locked state, the method further includes:
detecting whether alternating current disconnection occurs at an alternating current side of the microinverter, and turning on the Bluetooth signal on detecting that the alternating current disconnection occurs.

In an embodiment, the method further includes:
detecting, upon expiration of a preset time period from a moment at which the Bluetooth signal is turned on and the Bluetooth is in the locked state, whether the Bluetooth is in the locked state, and turning off the Bluetooth signal on detecting that the Bluetooth is in the locked state.

In an embodiment, the method further includes:
detecting a connecting state between the microinverter and the router, and a connecting state between the microinverter and the server;
setting the first flag to a failure state in response to the connecting state between the microinverter and the router being disconnection; and
setting the second flag to a failure state in response to the connecting state between the microinverter and the server being disconnection.

In an embodiment, among operation instructions sent by the user terminal through the Bluetooth communication, only an instruction for performing a networking operation and an instruction for viewing a current operating state of the microinverter are responded to.

In an embodiment, the method further includes:
performing identity authentication on the user terminal through the server, before the user terminal establishes network communication with the microinverter through the server.

In order to address the technical problem, an apparatus for controlling Bluetooth locking of a microinverter is further provided according to the present disclosure. The apparatus includes an initialization module, a networking module, a network connection module and a Bluetooth locking module.

The initialization module is configured to turn on a Bluetooth signal by default during an initialization phase, to establish Bluetooth communication with a user terminal.

The networking module is configured to receive, through the Bluetooth communication, networking information sent by the user terminal, connect to a router according to the networking information, and set a first flag to a success state in response to networking being successful.

The network connection module is configured to establish, via the router, a network connection with a server, and set a second flag to a success state when the network connection with the server is established successfully.

The Bluetooth locking module is configured to enable, only in response to both the first flag and the second flag being the success state, switching of Bluetooth between a locked state and an unlocked state according to a control instruction sent by the user terminal or the server, where the control instruction is configured to turn on and turn off the Bluetooth signal.

In an embodiment, the apparatus for controlling the Bluetooth locking of the microinverter further includes a Bluetooth activation module, a network disconnection detection module, a time delay module, a state update module and an identity authentication module.

The Bluetooth activation module is configured to determine whether both the first flag and the second flag are the success state, and turn on the Bluetooth signal on determining that the first flag or the second flag is not the success state.

The network disconnection detection module is configured to detect whether alternating current disconnection occurs at an alternating current side of the microinverter, and turn on the Bluetooth signal on detecting that the alternating current disconnection occurs.

The time delay module is configured to detect, upon expiration of a preset time period from a moment at which the Bluetooth signal is turned on and the Bluetooth is in the locked state, whether the Bluetooth is in the locked state, and turn off the Bluetooth signal on detecting that the Bluetooth is in the locked state.

The state update module is configured to detect a connecting state between the microinverter and the router, and a connecting state between the microinverter and the server, set the first flag to a failure state if the microinverter is disconnected from the router, and set the second flag to a failure state if the microinverter is disconnected from the server.

The identity authentication module is configured to perform identity authentication on the user terminal through the server, before the user terminal establishes network communication with the microinverter through the server.

In addition, the microinverter only responds an instruction for performing a networking operation and an instruction for viewing a current operating state of the microinverter among operation instructions sent by the user terminal through the Bluetooth communication.

In order to solve the technical problem, a device for controlling Bluetooth locking of a microinverter is further provided according to the present disclosure. The device includes a memory and a processor.

The memory is configured to store computer program.

The processor is configured to, when executing the computer program, implement the method for controlling the Bluetooth locking of the microinverter in the above embodiments.

In order to solve the technical problem, a computer-readable storage medium is further provided according to the present disclosure. The computer-readable storage medium stores a computer program, and the computer program, when executed by a processor, implements the method for controlling the Bluetooth locking of the microinverter as described above.

According to a method for controlling Bluetooth locking of a microinverter provided in the present disclosure, networking information is received by the microinverter through the Bluetooth communication, where the networking information is uploaded through a local Bluetooth connection, such that the microinverter is networked to a local area network. Then, the microinverter is connected to internet via a router in the local area network, and thus connected to a remote device such as a server, to achieve remote network control of the microinverter. Subsequently, the user can control the Bluetooth locking of the microinverter, and turn off the Bluetooth signal when the local connection is not required, to prevent other non-target users near the microinverter from connecting to the microinverter through Bluetooth, further ensuring the security of the microinverter. The Bluetooth locking control is implemented through a network connection without using an external switch, thereby effectively address the issues that microinverters are located in specialized environments where external switches are unsuitable. In addition, according to the present disclosure, the Bluetooth locking function is implemented only when both the networking of the microinverter is successful and the network connection with the server is successful. Consequently, in some specific application scenarios, when it is inconvenient for a user with control authority to unlock the Bluetooth but it is required to temporarily use the Bluetooth signal for a local connection, based on the method for controlling the Bluetooth locking according to the present disclosure, the Bluetooth signal is turned on by disconnecting the network of the microinverter, thereby achieving more flexible use and maintenance of the microinverter and better meeting actual application requirements.

The apparatus for controlling the Bluetooth locking of the microinverter and the computer-readable storage medium according to the present disclosure correspond to the above method and have the same effects as above.

### BRIEF DESCRIPTION OF THE DRAWINGS

In order to describe the embodiments of the present disclosure more clearly, drawings to be used in the description of the embodiments of the present disclosure are briefly described hereinafter. It is apparent that the drawings described below are merely some of the embodiments of the present disclosure, and those skilled in the art may obtain other drawings according to the drawings without any creative effort.
FIG. 1 is a flowchart of a method for controlling Bluetooth locking of a microinverter according to an embodiment of the present disclosure;
FIG. 2 is an application architecture diagram of a method for controlling Bluetooth locking of a microinverter according to an embodiment of the present disclosure;
FIG. 3 is a flowchart of a method for controlling Bluetooth locking of a microinverter according to another embodiment of the present disclosure;
FIG. 4 is a structural diagram of an apparatus for controlling Bluetooth locking of a microinverter according to an embodiment of the present disclosure; and
FIG. 5 is a structural diagram of an apparatus for controlling Bluetooth locking of a microinverter according to another embodiment of the present disclosure.

### DETAILED DESCRIPTION

Technical solutions in the embodiments of the present disclosure are clearly and completely described below in conjunction with the drawings of the embodiments of the present disclosure. Apparently, the embodiments described below are only some embodiments of the present disclosure, rather than all the embodiments. All other embodiments obtained by those skilled in the art based on the embodiments in the present disclosure without any creative efforts fall within the protection scope of the present disclosure.

The core of the present disclosure is to provide a method and apparatus for controlling Bluetooth locking of a microinverter for a microinverter, and a medium therefor.

The present disclosure is described in detail in conjunction with the drawings and the embodiments hereinafter, so as to facilitate those skilled in the art to better understand the solutions according to the present disclosure.

Currently, in photovoltaic power generation applications in the field of the distributed power generation systems, common control solutions for the microinverter in a photovoltaic power generation system include: directly connecting to a user terminal through wireless communication, or establishing communication indirectly to the user terminal through a gateway, so as to implement data transmission between the user terminal and the microinverter, and facilitate the user terminal to monitor the operating state of the microinverter and issue a control instruction, so that a user can control the photovoltaic power generation system conveniently. In view of the fact that the user terminal is typically implemented by a mobile device such as a smartphone in practice, the above wireless connection manner is generally implemented through Bluetooth (that is, Bluetooth communication) or Wi-Fi.

For currently common microinverter products, some microinverters use Bluetooth for a reserved connection with the user terminal. However, the microinverter configured with Bluetooth has the disadvantages that the microinverter can only be directly connected to the user terminal such as a mobile phone, and cannot be connected to a router. In this case, for storing the data of the microinverter in a cloud database, it is required to introduce a specific Bluetooth-to-Wi-Fi device, which increases complexity and cost of the photovoltaic power generation system. In addition, due to the restrictions of the communication protocol, the Bluetooth connection usually does not support identity authentication. That is, when the microinverter turns on a Bluetooth signal and is not paired with a certain device, any other device with a Bluetooth communication function may establish Bluetooth connection with the microinverter, causing security issues.

Another part of the microinverter products use Wi-Fi, which can be directly connected to mobile phones or wireless routers via Wi-Fi hotspots. However, when the microinverter is networked (to a local area network), the identity information (account and password) of a home wireless router of the user is broadcasted. Hackers may eavesdrop on wireless signals using devices to obtain information and password of the home wireless router of the user, and access the local area network of the user, which leads to security risks.

Also, some other Internet of Things devices have functions of performing Wi-Fi networking and establishing a direct connection by using the Bluetooth signal. Since Bluetooth supports only one-to-one device access, and the networking does not rely on broadcast modes, the security risk of hackers infiltrating the user's local area network is effectively mitigated.

In some specific application scenarios such as routine maintenance of the photovoltaic power generation system, the user or the user terminal device with control authority is not present, it is desired to lock the Bluetooth signal (that is, lock the Bluetooth or Bluetooth communication) to turn off the Bluetooth signal, so as to prohibit other non-target users from accessing, and the Bluetooth signal is conveniently turned on when necessary (for example, when maintenance personnel arrive at the user's home to maintain the device), achieving safe and controllable access to the microinverter. For most other Internet of Things devices, a flexible control of turning on and off of the Bluetooth signal may be implemented using an external switch. A physical switch is arranged at the outer surface of the device for direct user operation, and the device controls the on/off state of the Bluetooth signal according to the on/off state of the physical switch.

However, as a photovoltaic power generation device, the microinverter has unique product and application characteristics: the device body may be set outdoors, necessitating waterproof protection that precludes the configuration of physical switches on the device housing; the device body may be set at an elevated location (for example, on a roof or wall), making it difficult for the user to operate the external switch on the device housing. In the above application scenarios, currently common solutions for flexibly controlling the on/off state of the Bluetooth signal are not applicable to the microinverter. As a result, for conventional microinverters, the Bluetooth signal may be set always on to ensure the control of the device, which brings security risks.

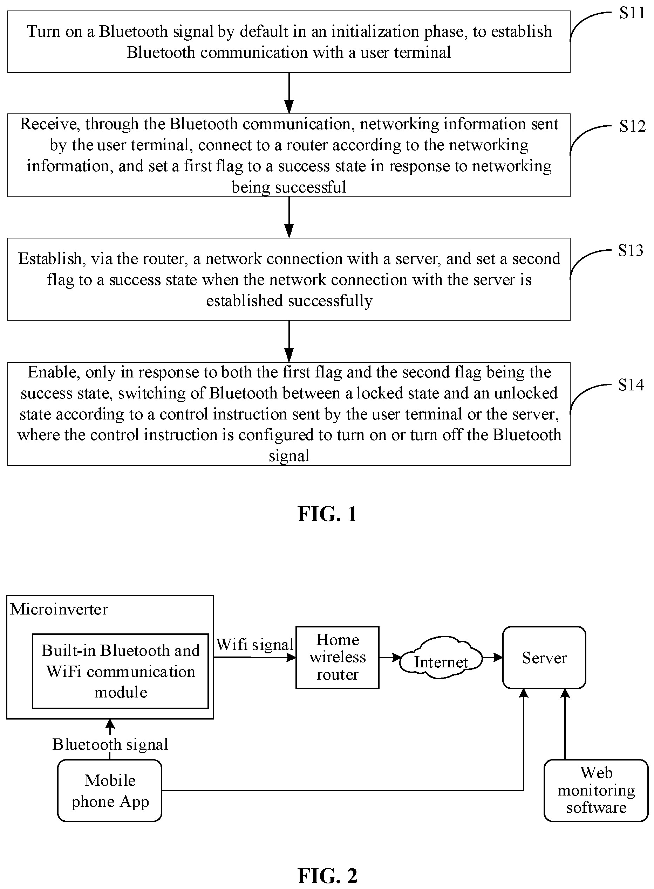

In view of the above problems, a method for controlling Bluetooth locking of a microinverter is provided according to the present disclosure. As shown in FIG. 1, the method includes steps S11 to S14.

In step S11, a Bluetooth signal is turned on by default in an initialization phase, to establish Bluetooth communication with a user terminal.

The above initialization phase is the initialization phase of the microinverter. Currently, the initialization phase of electrical devices typically occurs immediately upon power-up, that is, in response to powering on the microinverter or restarting the microinverter, the microinverter enters the initialization phase.

This step is performed in the initialization phase of the microinverter, upon the microinverter being powered on, and various configurations need to be completed in preparation for subsequent function implementation. At this phase, the microinverter has not established a network connection with a remote server, and then the microinverter turns on the Bluetooth signal to implement a direct connection with the user terminal (mostly referring to a mobile phone, similarly hereinafter), so as to meet the communication requirements of the user and the microinverter.

In step S12, networking information sent by the user terminal is received through the Bluetooth communication, and a connection to the router is established according to the networking information, and a first flag is set to a success state in response to networking being successful.

As can be seen from the above, the microinverter in the present disclosure is typically applied in the field of photovoltaic power generation, and more particularly applied in a home use environment. In this scenario, the microinverter establishes a network connection by means of devices such as the wireless router in the home use environment. As a consequence, the networking information for networking the microinverter to the home local area network in this step is the identity information including the Wi-Fi name and Wi-Fi password, which is used for establishing a wireless connection between the microinverter and the router in the user's home.

It should be noted that, wireless routers for home use typically support wired connections using network cables, but the wired connection is not applicable to microinverter. The reason for microinverters not utilizing wired connections remains consistent with the above. Given their specialized application environments, microinverters are designed to minimize external wiring and switches to reduce safety risks. The above problems may be solved in some specific application environments, where the microinverter establishes a connection with the router using a network cable. However, according to the conventional login mode of the router, it is required that the user terminal uploads the networking information including identity information for performing identity authentication, so that the microinverter can establish a connection with the router.

In addition, the specific implementation of the method is described above with the photovoltaic power generation in home scenarios as the application scenario of the microinverter. It is known that, the microinverter and the above-mentioned method for controlling the Bluetooth locking are not limited to home application scenarios. For example, in scenarios such as enterprises and factories, the above routers may be gateways and other network switching devices set inside the enterprises and factories, and the above user terminal may specifically be management-end devices held by operation and maintenance personnel with relevant permissions, or supervision devices such as unified supervision platforms. This embodiment does not limit this.

In step S13, a network connection with a server is established via the router, and a second flag is set to a success state when the network connection with the server is established successfully.

When the microinverter is networked to the local area network through step S12, if the communication connection between the router and the internet is normal, the microinverter is connected to the internet via the router, and then to a remote device such as a server or cloud platform. The user uses the user terminal device to remotely control and monitor the microinverter through an application (APP), including controlling a locked/unlocked state of Bluetooth of the microinverter.

The first flag and the second flag indicate network connection states of the microinverter. The first flag indicates whether the microinverter is networked successfully, that is, whether an available communication connection with the router is established, and the second flag indicates whether the network connection between the microinverter and the server is available. Each of the two flags has two states, i.e., success state and failure state, where the success state indicates the networking is successful or the connection is available, and the failure state indicates the networking is not successful or the connection is not available, to facilitate subsequent Bluetooth locking control.

In step S14, only in response to both the first flag and the second flag being the success state, changing of a locked/unlocked state of the Bluetooth is enabled according to a control instruction sent by the user terminal or the server, where the control instruction is configured to turn on and turn off the Bluetooth signal.

In an implementation, the locked/unlocked state of the Bluetooth mentioned in this step includes a locked state and an unlocked state of the Bluetooth. When the user terminal or server sends the control instruction to lock the Bluetooth, the Bluetooth signal of the microinverter is turned off, that is, the Bluetooth is locked, thus preventing connection to the microinverter through Bluetooth and ensuring secure control. The user may issue an unlocking instruction to turn on the Bluetooth signal as required, to recover the local connection function of the Bluetooth of the microinverter.

Further, as can be seen from the above, based on the established communication connection between the microinverter and the server through the above method, the implementation for controlling the Bluetooth signal locking without external switches can be achieved. Also, there is a limitation in the above method that the Bluetooth locking function is only available when both the first flag and the second flag are the success state. The purpose is to provide a method for temporarily turning on the Bluetooth signal in a non-contact manner which is implemented without controlling the locked/unlocked state of the Bluetooth.

During the execution of the above method, the Bluetooth locking control in step S14 is effective only when both the first flag and the second flag are the success state. The above method further includes steps S15.

In step S15, it is determined whether both the first flag and the second flag are the success state, and if it is determined that the first flag or the second flag is not the success state, the Bluetooth signal is turned on.

Accordingly, the state update of the first flag and the second flag is performed continuously in real time to ensure a timely control of the Bluetooth signal. In an implementation, the above method further includes step S21 to S23.

In step S21, a connecting state between the microinverter and the router and a connecting state between the microinverter and the server are detected.

In step S22, the first flag is set to a failure state if the microinverter is disconnected from the router.

In step S23, the second flag is set to a failure state if the microinverter is disconnected from the server.

Furthermore, in addition to a case that either the first flag or the second flag is the failure state, in an embodiment, a solution for temporarily turning on the Bluetooth signal during the Bluetooth being in the locked state is provided. In this case, the above method further includes step S24.

In step S24, it is detected whether alternating current disconnection occurs at an alternating current side of the microinverter, and the Bluetooth signal is turned on on detecting that the alternating current disconnection occurs.

Correspondingly, a method for temporarily turning on the Bluetooth signal during the Bluetooth being in the locked state, which can be implemented based on the method for controlling the Bluetooth locking provided in the above embodiment, includes but is not limited to the following three implementations.

### 1. Re-powering the microinverter.

In an embodiment, in a case that the microinverter is applied in the photovoltaic power generation system, the electric power generated by photovoltaic modules is fed into the grid after being converted by the microinverter, that is, the microinverter is powered by the electric power generated by the photovoltaic modules on a direct current side of the microinverter. In this case, the Bluetooth signal is temporarily turned on by disconnecting and connecting a direct current side bus between the microinverter and the photovoltaic modules.

The whole process is as follows: after the direct current bus is disconnected and then connected, the microinverter is powered on again and enters the initialization phase; the microinverter turns on the Bluetooth signal by default, the network connection between the microinverter and the router, the network connection between the microinverter and the server are disconnected, and the first flag and the second flag are the failure state; after re-establishing the connection with the server through the steps S11 and S12, the microinverter determines the current locked/unlocked state of the Bluetooth from the server; and then the Bluetooth signal is turned off again, thereby completing the temporarily turning on the Bluetooth signal during the locked state of the Bluetooth.

This method is applicable to a scenario where the user or relevant personnel (for example, the maintenance personnel of the microinverter or photovoltaic system) are near the photovoltaic modules (which are typically arranged at places with excellent lighting such as roofs), and it is required to turn on the Bluetooth signal of the photovoltaic modules to monitor the operating state of the microinverter (that is, there is a need for maintaining the photovoltaic modules by monitoring the operating state of the microinverter). By disconnecting and connecting the direct current bus between the photovoltaic modules and the microinverter, the Bluetooth signal of the microinverter is temporarily turned on, and then a device with Bluetooth is directly connected to the microinverter to monitor the operating state of the microinverter, facilitating subsequent maintenance operations of the photovoltaic power generation system and so on.

### 2. Turning off the router connected with the microinverter.

By turning off the router connected with the microinverter, the microinverter is disconnected from the internet and the local area network. According to steps S21 to S23, both the first flag and the second flag are the failure state. The Bluetooth signal is turned on according to step S15, so as to meet the user requirements in specific scenarios such as daily maintenance. When the router is turned on again, the microinverter performs operations such as networking and connecting with the server based on the previously received networking information, thereby restoring to the locked state of the Bluetooth.

This method for temporarily turning on the Bluetooth signal is applicable to a scenario where the user or relevant personnel are near the router (for example, at users' home). The Bluetooth signal of the microinverter can be conveniently turned on by turning off the router, without unlocking the Bluetooth.

### 3. Disconnecting an alternating current side bus of the microinverter.

In the application scenario of photovoltaic power generation system, the direct current voltage outputted by the photovoltaic modules is fed into the alternating current power grid used by the user after being converted by the microinverter, as stated above. The microinverter has two sides: a direct current side and an alternating current side, the direct current side is connected to the photovoltaic modules through the direct current bus, and the alternating current side is connected to the power grid through a cable. When the cable on the alternating current side of the microinverter is disconnected, according to step S24 in the above embodiments, even though the first flag and the second flag are the success state (the router and its network communications are all normal), the Bluetooth signal is turned on, to facilitate the user and relevant personnel to establish a local connection with the microinverter through Bluetooth, so as to meet their monitoring requirement.

This method for turning on the Bluetooth signal is applicable to an application scenario where the user and relevant personnel are near a distribution box. By disconnecting a circuit that is between the power grid and the alternating current side of the microinverter and is located in the distribution box, the Bluetooth signal of the microinverter is temporarily turned on, without unlocking the Bluetooth.

It should be understood that, the above three methods for temporarily turning on the Bluetooth signal without unlocking the Bluetooth are merely several possible implementations that can be realized according to the above method for controlling the Bluetooth locking, which are not limited to only the above three methods. In fact, the above examples are provided in view of a few possible and common scenarios in practical operation and maintenance scenarios of the microinverter, including: the user being near the photovoltaic modules, the user being near the router (at home), and the user being near the distribution box. The implementations of turning on the Bluetooth signal without unlocking the Bluetooth are all based on the control of disconnecting the microinverter from the local area network and from the internet, and the control of disconnecting the alternating current side from the power grid. Therefore, with any method for disconnecting the microinverter from the local area network which is between the microinverter and the router, and from the internet between the microinverter and the server, and for disconnecting the microinverter from the power grid, the Bluetooth signal can be turned on without unlocking the Bluetooth locking function.

Further, based on the above embodiments, a possible implementation is further provided according to an embodiment. That is, for turning on the Bluetooth signal without unlocking the Bluetooth through the above method, the method further includes step S25.

In step S25, it is detected, upon expiration of a preset time period from a moment at which the Bluetooth signal is turned on and the Bluetooth is in the locked state, whether the Bluetooth is in the locked state, and the Bluetooth signal is turned off on detecting that the Bluetooth is in the locked state.

In other words, when turning on the Bluetooth signal without unlocking the Bluetooth, the turned-on state of the Bluetooth signal is limited to the preset time period, to prevent the Bluetooth signal of the microinverter from remaining continuously on due to unexpected situations such as router power outages, distribution box tripping, etc., or from remaining continuously on when the network connection between the microinverter and the server fails to recover for a long time. It further avoids unauthorized access by users other than the target user to the microinverter through the Bluetooth, thereby enhancing security.

Similarly, to further improve the security of the microinverter during use, a preferred embodiment is further provided according to this embodiment. Among operation instructions sent by the user terminal through the Bluetooth communication, only an instruction for performing a networking operation and an instruction for viewing a current operating state of the microinverter are responded to.

In other words, for data interaction with the microinverter implemented through Bluetooth communication, only the networking operation on the microinverter (only partial write operations on the microinverter) and monitoring functions (read-only operations) are allowed.

According to the above embodiments, in an aspect, the networking of the microinverter is implemented, so that the microinverter is networked for subsequent remote control and Bluetooth locking. In another aspect, it also meets requirements for application scenarios where the user need temporary turning on of the Bluetooth signal without unlocking the Bluetooth (typically for maintenance purposes, where operation state information of the microinverter is required to provide data support to maintenance work)

In this case, if the Bluetooth signal is temporarily turned on and, during the short period before the target personnel (i.e., maintenance staff) establish a local connection to the microinverter through the Bluetooth, the Bluetooth is connected by unauthorized personnel, such personnel can only perform networking operations or monitoring requests on the microinverter. In this way, potential hazards can be effectively controlled, further enhancing the security of the application of the microinverter.

Further, it should be understood that, the above limitations on the Bluetooth signal are based on a fact that Bluetooth communications usually do not support the identity authentication function. If the Bluetooth signal is always on, and the microinverter has no means to identify whether the identity of a connected device is legitimate, leading to security risks. However, for remote controls achieved by the network connection, the user can use a mobile phone APP or Web monitoring software to indirectly issue control instructions to the microinverter through the server. This communication connection way supports the identity authentication.

Therefore, in order to further improve security, a possible implementation is further provided according to an embodiment. Identity authentication is performed on the user terminal by the server, before the user terminal establishes network communication with the microinverter through the server.

In an embodiment, the user establishes a connection to the microinverter through the Wi-Fi hotspot function that is commonly provided in smartphones. In this case, the smartphone held by the user is equivalent to the router and the server in the above embodiments, and functions the same as the router and the server. Therefore, the above identity authentication is no longer required. Instead, identity authentication is performed before the user establishes the connection to the microinverter via the Wi-Fi hotspot).

A method for controlling Bluetooth locking of a microinverter is provided according to the present disclosure, and the method is implemented by a microinverter that supports Bluetooth and Wi-Fi. After the microinverter is initialized, the microinverter first performs networking through the Bluetooth communication, so that the microinverter is connected to the internet and is remotely controlled by a device such as the server. Moreover, remote control of the Bluetooth locking function is also supported, without external switches disposed on the surface of the microinverter device, preventing safety issues due to the particularity of microinverter application scenarios. Furthermore, in the present disclosure, by setting the first flag and the second flag, the control of Bluetooth locking function is only performed when the network connection of the microinverter is normal. As a result, the temporarily turning on of the Bluetooth signal is implemented based on disconnecting the microinverter from the network, meeting the requirements for the microinverter maintenance and other scenarios, and improving the user experience.

In order to explain the above method for controlling the Bluetooth locking of the microinverter more clearly and in detail, a schematic diagram of an application scenario of the microinverter is provided according to an embodiment, where the microinverter is applied in a photovoltaic system in a home scenario. As shown in FIG. 2, the photovoltaic system includes: a microinverter with a built-in Bluetooth and Wi-Fi communication module, a home wireless router, a server, and a mobile phone APP and Web monitoring software which performs control functions and is provided in a user terminal device, and their communication relationship is shown in FIG. 2.

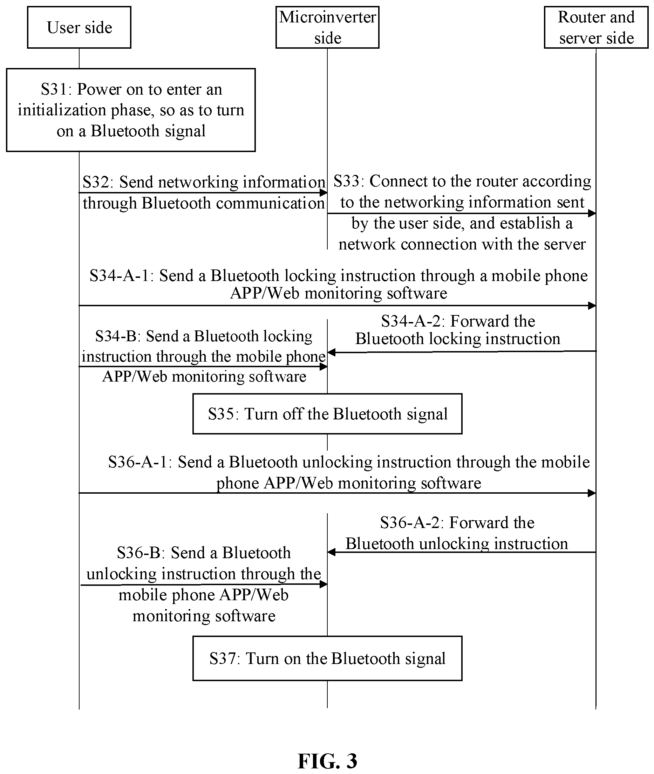

Based on the application architecture shown in FIG. 2, the above method for controlling the Bluetooth locking is performed on the microinverter side, the user side, and the router and server side. As shown in FIG. 3, the method for controlling the Bluetooth locking includes steps S31 to S37.

In step S31, the microinverter is powered on to enter an initialization phase, so as to turn on a Bluetooth signal.

In step S32, the user side sends networking information to the microinverter side through Bluetooth communication.

In step S33, the microinverter is connected to the router according to the networking information sent by the user side, and establishes a network connection with the server.

In step S34, the user side sends a Bluetooth locking instruction to the microinverter side.

In an embodiment, according to the different connections between the user side and the microinverter side, the step S34 may be implemented in the following two ways S34-A and S34-B.

In step S34-A-1, a Bluetooth locking instruction is sent to the server side through mobile phone APP/Web monitoring software.

In step S34-A-2, the server side forwards the Bluetooth locking instruction to the microinverter side.

This way is suitable for a scenario where a network connection is established between the microinverter side and the server via the router, and the user side remotely controls the microinverter through the network by using the server; and
In step S34-B, a Bluetooth locking instruction is sent to the server side through the mobile phone APP/Web monitoring software.

This way is suitable for a scenario where the user side directly establishes a network connection with the microinverter side via a Wi-Fi hotspot.

The two implementations A and B of the step S34 are determined according to the network connections between the user side and the microinverter. If the user side indirectly establishes a network connection with the microinverter side through the server, the implementation A is adopted, and if the user side directly establishes a network connection with the microinverter side via the Wi-Fi hotspot, the implementation B is adopted.

In step S35, the Bluetooth signal is turned off.

In step S36, the user side sends a Bluetooth unlocking instruction to the microinverter side.

Similar to the step S34, according to the different connections between the user side and the microinverter side, the step S36 may be implemented in the following two ways step S36-A and step S36-B.

In step S36-A-1, a Bluetooth unlocking instruction is sent to the server side through the mobile phone APP/Web monitoring software.

In step S36-A-2, the server side forwards the Bluetooth unlocking instruction to the microinverter side.

In step S36-B, a Bluetooth unlocking instruction is sent to the server side through the mobile phone APP/Web monitoring software.

In step S37, the Bluetooth signal is turned on.

In addition, it should be noted that, in practice, after responding to the Bluetooth locking instruction or the Bluetooth unlocking instruction sent by the user side, the microinverter returns a corresponding operation result. A path for returning the operation result is the same as the path for sending the corresponding instruction, which is not repeated in this embodiment.

Moreover, for other methods for controlling the microinverter, such as the method for temporarily turning on the Bluetooth signal without unlocking the Bluetooth, and operations performed by the microinverter when remotely controlled by the server side (or the user side connected via a Wi-Fi hotspot) via a network connection, reference may be made to the embodiments of the above method for controlling the Bluetooth locking, which will also not be repeated in this embodiment.

The method for controlling the Bluetooth locking of the microinverter is described in detail in the above embodiments. Embodiments of an apparatus for controlling Bluetooth locking of a microinverter are further provided according to the present disclosure. It should be noted that, in the present disclosure, embodiments of the apparatus are described from two perspectives, that is, a perspective based on functional modules and a perspective based on hardware.

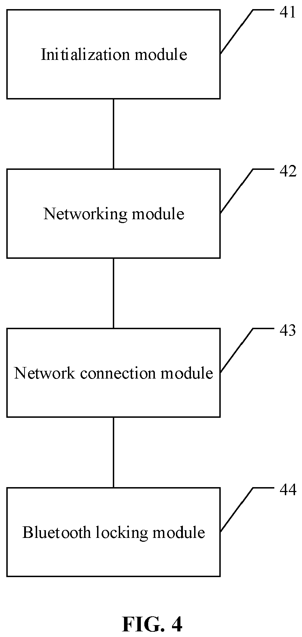

From the perspective based on functional modules, as shown in FIG. 4, an apparatus for controlling Bluetooth locking of a microinverter is provided according to this embodiment. The device includes an initialization module 41, a networking module 42, a network connection module 43, and a Bluetooth locking module 44.

The initialization module 41 is configured to turn on a Bluetooth signal by default during an initialization phase, to establish Bluetooth communication with a user terminal.

The networking module 42 is configured to receive, through the Bluetooth communication, networking information sent by the user terminal, connect to a router according to the networking information, and set a first flag to a success state in response to networking being successful.

The network connection module 43 is configured to establish, via the router, a network connection with a server, and set a second flag to a success state when the network connection with the server is established successfully.

The Bluetooth locking module 44 is configured to enable, only in response to both the first flag and the second flag being the success state, switching of Bluetooth between a locked state and an unlocked state according to a control instruction sent by the user terminal or the server, where the control instruction is configured to turn on and turn off the Bluetooth signal.

In an embodiment, the apparatus for controlling the Bluetooth locking of the microinverter further includes a Bluetooth activation module, a network disconnection detection module, a time delay module, a state update module and an identity authentication module.

The Bluetooth activation module is configured to determine whether both the first flag and the second flag are the success state, and turn on the Bluetooth signal on determining that the first flag or the second flag is not the success state.

The network disconnection detection module is configured to detect whether alternating current disconnection occurs at an alternating current side of the microinverter, and turn on the Bluetooth signal on detecting that the alternating current disconnection occurs.

The time delay module is configured to detect, upon expiration of a preset time period from a moment at which the Bluetooth signal is turned on and the Bluetooth is in the locked state, whether the Bluetooth is in the locked state, and turn off the Bluetooth signal on detecting that the Bluetooth is in the locked state.

The state update module is configured to detect a connecting state between the microinverter and the router, and a connecting state between the microinverter and the server, set the first flag to a failure state if the microinverter is disconnected from the router, and set the second flag to a failure state if the microinverter is disconnected from the server.

The identity authentication module is configured to perform identity authentication on the user terminal through the server, before the user terminal establishes network communication with the microinverter through the server.

In addition, the microinverter only responds an instruction for performing a networking operation and an instruction for viewing a current operating state of the microinverter among operation instructions sent by the user terminal through the Bluetooth communication.

Since the apparatus embodiments correspond to the method embodiments, details about the apparatus embodiments may refer to the description of the method embodiments, and thus are not described here.

An apparatus for controlling Bluetooth locking of a microinverter is provided according to the embodiments. During the initialization phase of the microinverter, the initialization module turns on the Bluetooth signal, enabling the networking module to receive the networking information sent by the user terminal through Bluetooth communication, to complete the networking process of the microinverter. Then the microinverter is connected to the internet via the network connecting module, so that the microinverter can be remotely controlled by devices such as the server. The Bluetooth locking module provides support to remote control of the Bluetooth locking function. The control of the Bluetooth locking function is implemented without external switches disposed on the surface of the microinverter device, preventing safety issues due to the particularity of microinverter application scenarios. Furthermore, in the embodiments, by setting the first flag and the second flag, the control of Bluetooth locking function is only performed when the network connection of the microinverter is normal. As a result, the temporarily turning on of the Bluetooth signal is implemented based on disconnecting the microinverter from the network, meeting the requirements for the microinverter maintenance and other scenarios, and improving the user experience

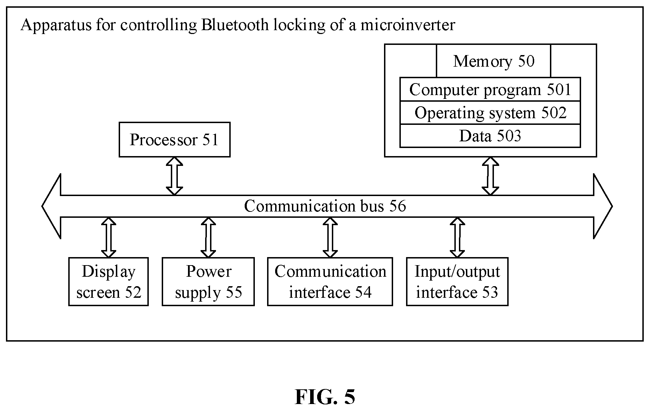

FIG. 5 is a structural diagram of an apparatus for controlling Bluetooth locking of a microinverter according to another embodiment of the present disclosure. As shown in FIG. 5, the device for controlling the Bluetooth locking of the microinverter includes a memory 50 and a processor 51.

The memory 50 is configured to store a computer program.

The processor 51 is configured to, when executing the computer program, implement the method for controlling the Bluetooth locking of the microinverter in the above embodiments.

The apparatus for controlling the Bluetooth locking of the microinverter according to the embodiment may include but is not limited to a smart phone, a tablet, a laptop, a desktop computer or the like.

The processor 51 may include one or more processing cores, such as a 4-core processor, an 8-core processor, or the like. The processor 51 may be implemented in at least one hardware form of a digital signal processor (DSP), a field-programmable gate array (FPGA), and a programmable logic array (PLA). The processor 51 may include a main processor and a coprocessor. The main processor is configured to process data in a wake-up state, and is also referred to as a central processing unit (CPU). The coprocessor is a low-power processor for processing data in a standby state. In some embodiments, the processor 51 may be integrated with a graphics processing unit (GPU), and the GPU is responsible for rendering and drawing contents to be displayed on a display screen. In some embodiments, the processor 51 may further include an artificial intelligence (AI) processor configured to perform a calculation operation related to machine learning.

The memory 50 may include one or more computer-readable storage media. The computer-readable storage medium may be non-transient. The memory 50 may further include a high-speed random access memory and a non-volatile memory, such as one or more magnetic disk storage devices and one or more flash memory storage devices. In the embodiments, the memory 50 is at least used to store the following computer program 501. The computer program is loaded and executed by the processor 51 to implement relevant steps of the method for controlling the Bluetooth locking of the microinverter according to any one of the above embodiments. In addition, the memory 50 may further store an operating system 502, data 503, and other resources in a temporary manner or a permanent manner. The operating system 502 may include Windows, Unix, Linux, and the like. The data 503 may include but is not limited to the method for controlling the Bluetooth locking of the microinverter.

In some embodiments, the apparatus for controlling the Bluetooth locking of the microinverter may further include a display screen 52, an input/output interface 53, a communication interface 54, a power supply 55, and a communication bus 56.

It can be understood by those skilled in the art that, the structure shown in FIG. 5 does not intend to constitute a limitation on the apparatus for controlling the Bluetooth locking of the microinverter, and more or fewer components may be included in the apparatus.

A device for controlling Bluetooth locking of a microinverter according to embodiments of the present disclosure includes a memory and a processor. The processor, when executing the program stored in the memory, implements the method for controlling the Bluetooth locking of the microinverter.

In the device for controlling the Bluetooth locking of the microinverter according to the embodiment, the computer program stored in the memory is executed by the processor to implement the following: after the microinverter is initialized, a networking process of the microinverter is first completed through the Bluetooth communication, so that the microinverter is connected to the internet and is remotely controlled by the devices such as the server. Moreover, remote control of the Bluetooth locking function is also supported, without external switches disposed on the surface of the microinverter device, preventing safety issues due to the particularity of microinverter application scenarios. Furthermore, in the embodiment, by setting the first flag and the second flag, the control of Bluetooth locking function is only performed when the network connection of the microinverter is normal. As a result, the temporarily turning on of the Bluetooth signal is implemented based on disconnecting the microinverter from the network, meeting the requirements for the microinverter maintenance and other scenarios, and improving the user experience.

A computer-readable storage medium is further provided according to an embodiment of the present disclosure. The computer-readable storage medium stores a computer program. The computer program, when executed by a processor, implements the method described in the above embodiments.

It can be understood that, if the method in the above embodiments is implemented in a form of a software functional unit and is sold or used as an independent product, the software functional unit may be stored in a computer-readable storage medium. Based on such understanding, the technical solutions according to the present disclosure essentially or the part that contributes to the conventional technology, or all or a part of the technical solutions may be embodied in a form of a software product. The computer software product is stored in a storage medium and performs all or part of steps of the method described in the above embodiments of the present disclosure. The storage medium includes various media that can store program codes, such as a U disk, a mobile hard disk, a read-only memory (ROM), a random access memory (RAM), a magnetic disk, or an optical disk.

For the computer-readable storage medium provided according to the embodiment, the computer program stored therein, when executed, implements the following: after the microinverter is initialized, a networking process of the microinverter is first completed through the Bluetooth communication, so that the microinverter is connected to the internet and is remotely controlled by the devices such as the server. Moreover, remote control of the Bluetooth locking function is also supported, without external switches disposed on the surface of the microinverter device, preventing safety issues due to the particularity of microinverter application scenarios. Furthermore, in the embodiment, by setting the first flag and the second flag, the control of Bluetooth locking function is only performed when the network connection of the microinverter is normal. As a result, the temporarily turning on of the Bluetooth signal is implemented based on disconnecting the microinverter from the network, meeting the requirements for the microinverter maintenance and other scenarios, and improving the user experience.

The method and apparatus for controlling the Bluetooth locking of the microinverter, and a medium therefor provided according to the present disclosure are described above in detail. The various embodiments in the specification are described in a progressive manner. Each of the embodiments mainly focuses on differences from other embodiments, and references can be made to each other for the same or similar parts among the embodiments. Since the apparatus disclosed in the embodiments corresponds to the method disclosed in the embodiments, the description for the apparatus is simple, and reference may be made to the method embodiments for the relevant parts. It should be noted that, those skilled in the art may make several improvements and modifications to the present disclosure without departing from the principles of the present disclosure. These improvements and modifications shall fall within the protection scope of the claims of the present disclosure.

It should be further noted that relation terms such as "first" and "second" herein are only used to distinguish one entity or operation from another entity or operation, and do not necessarily require or imply that there is an actual relation or sequence between these entities or operations. Furthermore, the term "comprise", "include" or any other variation thereof is intended to cover a non-exclusive inclusion, so that a process, a method, an article, or a device including a set of elements includes not only those elements, but also other elements not expressly listed or elements inherent in such a process, method, article, or device. Unless expressively limited, the statement "including a..." does not exclude the case that other similar elements may exist in the process, method, article or device including the set of elements.

## Claims

1. A method for controlling Bluetooth locking of a microinverter, comprising:
turning on a Bluetooth signal by default during an initialization phase to establish Bluetooth communication with a user terminal;
receiving, through the Bluetooth communication, networking information sent by the user terminal, connecting to a router according to the networking information, and setting a first flag to a success state in response to networking being successful;
establishing, via the router, a network connection with a server, and setting a second flag to a success state when the network connection with the server is established successfully; and
enabling, only in response to both the first flag and the second flag being the success state, switching of Bluetooth between a locked state and an unlocked state according to a control instruction sent by the user terminal or the server, wherein the control instruction is configured to turn on and turn off the Bluetooth signal.

2. The method according to claim 1, wherein when the Bluetooth is in the locked state, the method further comprises:
determining whether both the first flag and the second flag are the success state, and turning on the Bluetooth signal on determining that the first flag or the second flag is not the success state.

3. The method according to claim 2, wherein when the Bluetooth is in the locked state, the method further comprises:
detecting whether alternating current disconnection occurs at an alternating current side of the microinverter, and turning on the Bluetooth signal on detecting that the alternating current disconnection occurs.

4. The method according to claim 3, further comprising:
detecting, upon expiration of a preset time period from a moment at which the Bluetooth signal is turned on and the Bluetooth is in the locked state, whether the Bluetooth is in the locked state, and turning off the Bluetooth signal on detecting that the Bluetooth is in the locked state.

5. The method according to claim 2, further comprising:
detecting a connecting state between the microinverter and the router, and a connecting state between the microinverter and the server;
setting the first flag to a failure state in response to the connecting state between the microinverter and the router being disconnection; and
setting the second flag to a failure state in response to the connecting state between the microinverter and the server being disconnection.

6. The method according to any one of claims 1 to 5, wherein among operation instructions sent by the user terminal through the Bluetooth communication, only an instruction for performing a networking operation and an instruction for viewing a current operating state of the microinverter are responded to.

7. The method according to any one of claims 1 to 5, further comprising:
performing identity authentication on the user terminal through the server, before the user terminal establishes network communication with the microinverter through the server.

8. An apparatus for controlling Bluetooth locking of a microinverter, comprising:
an initialization module, configured to turn on a Bluetooth signal by default during an initialization phase, to establish Bluetooth communication with a user terminal;
a networking module, configured to receive, through the Bluetooth communication, networking information sent by the user terminal, connect to a router according to the networking information, and set a first flag to a success state in response to networking being successful;
a network connection module, configured to establish, via the router, a network connection with a server, and set a second flag to a success state when the network connection with the server is established successfully; and
a Bluetooth locking module, configured to enable, only in response to both the first flag and the second flag being the success state, switching of Bluetooth between a locked state and an unlocked state according to a control instruction sent by the user terminal or the server, wherein the control instruction is configured to turn on and turn off the Bluetooth signal.

9. A device for controlling Bluetooth locking of a microinverter, comprising:
a memory, configured to store a computer program; and
a processor, configured to, when executing the computer program, implement the method according to any one of claims 1 to 7.

10. A computer-readable storage medium, wherein the computer-readable storage medium stores a computer program, and the computer program, when executed by a processor, implements the method according to any one of claims 1 to 7.
